# EUROPÄISCHE PATENTSCHRIFT

(11) **EP 3 516 342 B1**
(45) Veröffentlichungstag und Bekanntmachung des Hinweises auf die Patenterteilung: **01.06.2022**
(21) Anmeldenummer: 17769095.5
(22) Anmeldetag: 20.09.2017
(51) Int. Cl.: G01F 22/00, G01F 1/36, G01F 1/74, G01F 1/78, G01F 15/00

(54) **VORRICHTUNG ZUM BESTIMMEN DES VOLUMENSTROMS VON ÜBER EINE FLÜSSIGGASLEITUNG ABGEGEBENEM FLÜSSIGGAS**
DEVICE FOR DETERMINING THE VOLUME FLOW OF A LIQUID GAS DISCHARGED BY A LIQUID GAS LINE
DISPOSITIF DE DÉTERMINATION D'UN FLUX VOLUMÉTRIQUE D'UN GAZ LIQUIDE DISTRIBUÉ PAR UNE CONDUITE DE GAZ LIQUIDE

(30) Priorität: 20.09.2016 DE 202016105234 U
(43) Veröffentlichungstag der Anmeldung: 31.07.2019
(73) Patentinhaber: Saeta GmbH & Co. KG, 22880 Wedel (DE)
(72) Erfinder: HAAR, Stefan, 25421 Pinneberg (DE)
(74) Vertreter: Hauck Patentanwaltspartnerschaft mbB
(86) Internationale Anmeldenummer: PCT/EP2017/073818
(87) Internationale Veröffentlichungsnummer: WO 2018/054998

(56) Entgegenhaltungen:
- AU-B2- 647 983
- JP-A- S6 262 094
- US-A- 5 922 969
- US-A1- 2014 261 867
- WU K C: "OPERATING EXPERIENCE USING VENTURI FLOW METERS AT LIQUID HELIUM TEMPERATURE", TECHNICAL PAPER OF ISA, INSTRUMENT SOCIETY OF AMERICA, Bd. 47, Nr. PART 01, 1992, Seiten 479-486, XP000330076, ISSN: 1054-0032
- Cashco: "FLUID FLOW FLUID FLOW BASICS BASICS O F O F THROTTLING VALVES THROTTLING VALVES", , 1999, XP055433180, Gefunden im Internet: URL:https://www.controlglobal.com/assets/M edia/MediaManager/RefBook_Cashco_Fluid.pdf [gefunden am 2017-12-07]

## Beschreibung

Die Erfindung betrifft eine Vorrichtung zum Bestimmen des Volumenstroms von über eine Flüssiggasleitung abgegebenem Flüssiggas, umfassend einen über ein Anschlussventil mit variablem Öffnungsquerschnitt an die Flüssiggasleitung anschließbaren Messleitungsabschnitt, und eine an dem Messleitungsabschnitt angeordnete Messeinrichtung, die den durch den Messleitungsabschnitt fließenden Flüssiggas-Volumenstrom bestimmt.

Mit derartigen Vorrichtungen wird beispielsweise bei der Abgabe von Flüssiggas aus einem Tank der abgegebene Volumenstrom gemessen. Die Messvorrichtungen unterliegen Zulassungsvoraussetzungen, insbesondere der Measuring Instruments Directive (MID). Es sind Messvorrichtungen bekannt, die einen Gasabscheider und ein Druckhalteventil kombiniert mit einem Volumenzähler aufweisen. Das Druckhalteventil sorgt dafür, dass das Flüssiggas nicht in die Gasphase übergeht, wenn zum Beispiel ein leerer Schlauch oder ein leerer Behälter ohne ausreichenden Innendruck angeschlossen wird und es in der Folge zu einem Druckabfall kommt. Der Aufbau mit Gasabscheider und Druckhalteventil ist allerdings komplex und es wird eine nasse Rückleitung von dem Gasabscheider zum Tank benötigt. Außerdem weisen solche Vorrichtungen ein hohes Gewicht und eine erhebliche Baugröße sowie einen erheblichen Druckverlust auf. Zum Stand der Technik gehören zum Beispiel die Dokumente US 2014/0261867 A1, AU 647 983 B2 und JP S62 62094 A.

Es ist daher auch bereits bekannt, anstelle eines Gasabscheiders und eines Druckhalteventils einen Gasblasendetektor einzusetzen, der unzulässige Gasanteile in dem Flüssiggas detektiert und gegebenenfalls ein Warnsignal ausgibt, woraufhin die Abgabe gestoppt werden kann. Der Verzicht auf den Gasabscheider und das Druckhalteventil führt zu einem einfacheren Aufbau, einem geringeren Gewicht und einer kleineren Baugröße. Weiterhin sind Venturi-Messeinrichtungen bekannt, die aufgrund eines in einer Venturi-Düse bei Durchfließen des Flüssiggases auftretenden Druckabfalls auf die Strömungsgeschwindigkeit und daraus auf den Volumenstrom schließen. Insbesondere aus Zulassungsgründen darf in Venturi-Messeinrichtungen, aber auch in anderen Messeinrichtungen zur Bestimmung des Volumenstroms, ein Minimalvolumenstrom nicht unterschritten werden. Wird bei Verwendung solcher Messeinrichtungen eine mit Flüssiggas gefüllte Flüssiggasleitung an einen vollständig leeren Tank angeschlossen, wie dies beispielsweise bei einer Revision der Fall ist, so bricht zunächst der Druck in der Flüssiggasleitung zusammen und das darin enthaltene Flüssiggas geht aus der flüssigen Phase über in die gasförmige Phase. Bei an die Flüssiggasleitung (Schlauch) angeschlossener Messeinrichtung bricht dann auch in der Messeinrichtung trotz laufender Förderpumpe der Druck zusammen, bis die Förderpumpe erneut den für die flüssige Phase erforderlichen Druck aufbauen kann. Dies führt regelmäßig zum Auslösen des Gasblasendetektors. Drosselt man den Volumenstrom hingegen mit dem Stellglied so ab, dass die Flüssigphase in der Messanlage aufrechterhalten bleibt, läuft man Gefahr, den zulässigen Minimalvolumenstrom zu unterschreiten. Eine andere am Markt bekannte Lösung unterbricht während der Druckaufbauphase die Messung und riskiert so die Abgabe von nicht unerheblichen Mengen von Gas ohne diese messtechnisch zu berücksichtigen und zu berechnen.

Ausgehend von dem erläuterten Stand der Technik liegt der Erfindung die Aufgabe zugrunde, eine Vorrichtung der eingangs genannten Art bereitzustellen, die bei einfachem Aufbau ein möglichst geringes Gewicht und eine möglichst geringe Baugröße aufweist und gleichzeitig jederzeit eine zuverlässige Bestimmung des Volumenstroms ermöglicht.

Die Erfindung löst die Aufgabe durch den Gegenstand von Anspruch 1. Vorteilhafte Ausgestaltungen finden sich in den abhängigen Ansprüchen, der Beschreibung und den Figuren.

Eine Vorrichtung der eingangs genannten Art ist erfindungsgemäß gekennzeichnet durch eine Steuereinrichtung, an der Messdaten der Messeinrichtung anliegen, wobei die Steuereinrichtung dazu ausgebildet ist, ein Warnsignal auszugeben und/oder die Flüssiggasabgabe zu stoppen, wenn der durch die Messeinrichtung bestimmte Flüssiggas-Volumenstrom einen Minimalvolumenstrom unterschreitet, wobei die Steuereinrichtung weiter dazu ausgebildet ist, zu Beginn eines Flüssiggasabgabevorgangs in einem ersten Öffnungsschritt das Anschlussventil so zum teilweisen Öffnen anzusteuern, dass der Minimalvolumenstrom in dem Messleitungsabschnitt während der Zeitdauer des ersten Öffnungsschritts nicht unterschritten wird, und in einem nachfolgenden zweiten Öffnungsschritt das Anschlussventil zum vollständigen Öffnen anzusteuern.

Das Flüssiggas kann beispielsweise aus einem stationären Tank in einen Tank eines Tankwagens abgegeben werden. Bei dem Flüssiggas kann es sich zum Beispiel um Propan, Butan oder ähnliches handeln. Grundsätzlich kommen beliebige Flüssiggase in Frage. Zur Abgabe des Flüssiggases ist eine geeignete Pumpe vorgesehen, die beispielsweise zwischen einem Flüssiggastank, aus dem das Flüssiggas abgegeben wird, und der erfindungsgemäßen Vorrichtung angeordnet sein kann.

Die erfindungsgemäße Vorrichtung besitzt einen Messleitungsabschnitt, der an die zur Abgabe des Flüssiggases genutzte Flüssiggasleitung so anschließbar ist, dass das durch die Flüssiggasleitung fließende Flüssiggas vollständig auch durch den Messleitungsabschnitt fließt, so dass der gesamte abgegebene Volumenstrom erfasst wird. Der Messleitungsabschnitt kann in die Flüssiggasleitung eingesetzt werden und so einen Teil der Flüssiggasleitung bilden. Zum Anschließen kann der Messleitungsabschnitt beispielsweise zwei Anschlüsse, insbesondere zwei Anschlussflansche aufweisen. An dem Messleitungsabschnitt ist eine Messeinrichtung angeordnet, die den Flüssiggas-Volumenstrom in dem Messleitungsabschnitt, insbesondere in der Messeinrichtung, bestimmt.

Die erfindungsgemäße Steuereinrichtung erhält Signale bzw. Messwerte von der Messeinrichtung. Sofern die Steuereinrichtung feststellt, dass der von der Messeinrichtung gemessene Volumenstrom einen vorgegebenen Minimalvolumenstrom unterschreitet, gibt die Steuereinrichtung ein Warnsignal aus und/oder beendet den Abgabevorgang des Flüssiggases. Darüber hinaus steuert die erfindungsgemäße Steuereinrichtung das Anschlussventil, über das der Messleitungsabschnitt und damit die Messeinrichtung mit der Flüssiggasleitung verbunden werden, zu Beginn eines Abgabevorgangs zweistufig an. In einem erste Öffnungsschritt steuert die Steuereinrichtung das Anschlussventil so an, dass dieses teilweise öffnet, die Verbindung zu der Flüssiggasleitung also mit einem reduzierten Öffnungsquerschnitt bereitstellt derart, dass der Minimalvolumenstrom in dem Messleitungsabschnitt für die Zeitdauer des ersten Öffnungsschritts nicht unterschritten wird. Nach Beendigung des ersten Öffnungsschritts steuert die Steuereinrichtung das Anschlussventil dann in einem zweiten Öffnungsschritt zum vollständigen Öffnen an, also derart, dass das Anschlussventil den für die Verbindung zur Flüssiggasleitung vorgesehenen vollständigen Öffnungsquerschnitt bereitstellt.

Durch diesen reduzierten Verbindungsquerschnitt zwischen Messleitungsabschnitt und Flüssiggasleitung kann auch zu Beginn einer Flüssiggasabgabe, insbesondere bei einem damit möglicherweise verbundenen Druckabfall in der Flüssiggasleitung beispielsweise aufgrund eines Anschließen der Flüssiggasleitung an einen leeren Tank, für die Dauer des ersten Öffnungsschritts sicher verhindert werden, dass es in dem Messleitungsabschnitt zu einem Vergasen des Flüssiggases kommt. Gleichzeitig ist der bereitgestellte Öffnungsquerschnitt des Anschlussventils ausreichend um sicherzustellen, dass der Minimalvolumenstrom während der Zeitdauer des ersten Öffnungsschritts nicht unterschritten wird.

Die Zeitdauer des ersten Öffnungsschritts ist dabei derart, dass bis zum Beginn des zweiten Öffnungsschritts und der damit verbundenen vollständigen Öffnung des Anschlussventils eine beispielsweise zur Abgabe des Flüssiggases vorgesehene Förderpumpe einen ausreichenden Druck aufbauen kann, so dass es anschließend nicht mehr zu einem Vergasen des Flüssiggases kommt. Es kommt mithin auch im Zuge des vollständigen Öffnens des Anschlussventils im zweiten Öffnungsschritt nicht zu einem unzulässigen Vergasen des Flüssiggases. Gleichzeitig wird der abgegebene Volumenstrom erfindungsgemäß lückenlos während des gesamten Vorgangs, also sowohl während des ersten Öffnungsschritts als auch während des zweiten Öffnungsschritts ordnungsgemäß gemessen, so dass die relevanten Zulassungsbedingungen sicher eingehalten sind.

Die erfindungsgemäße Vorrichtung zeichnet sich dabei durch einen einfachen Aufbau, eine geringe Baugröße und ein geringes Gewicht aus. Es werden keine zusätzlichen Komponenten, wie Stellungsrückmelder hinsichtlich des Anschlussventils oder andere Sensoren benötigt. Die erfindungsgemäße Vorrichtung weist dabei insbesondere kein Druckhalteventil und vorzugsweise auch keinen Gasabscheider auf. Nicht zuletzt dadurch zeichnet sich die erfindungsgemäße Vorrichtung auch durch eine große Robustheit aus.

An dem Messleitungsabschnitt kann weiterhin ein Gasblasendetektor angeordnet sein, der Gasanteile in dem Flüssiggas detektiert und ein Signal ausgibt, wenn unzulässig hohe Gasanteile in dem Flüssiggas detektiert werden. An der Steuereinrichtung liegen dann auch Messdaten des Gasblasendetektors an und die Steuereinrichtung ist dazu ausgebildet, ein Warnsignal auszugeben und/oder die Flüssiggasabgabe zu stoppen, wenn durch den Gasblasendetektor Gasanteile in dem Flüssiggas detektiert werden oder wenn der durch die Messeinrichtung bestimmte Flüssiggas-Volumenstrom einen Minimalvolumenstrom unterschreitet. Der Gasblasendetektor bietet eine weitere Sicherheit hinsichtlich eines möglichen Vergasens von Flüssiggas. Diesbezüglich sei darauf hingewiesen, dass gegebenenfalls geringe Gasanteile unterhalb einer Schwelle akzeptabel sein können. Es kann dem Gasblasendetektor ein Grenzwert vorgegeben werden, ab dem Gasanteile eine unzulässige Höhe erreichen und entsprechend der Gasblasendetektor ein Signal an die Steuereinrichtung sendet.

Bei der Messeinrichtung kann es sich um eine an sich bekannte Venturi-Messeinrichtung handeln, die den Flüssiggas-Volumenstrom insbesondere aus einem beim Durchfließen des Flüssiggases in der Venturi-Messeinrichtung auftretenden Druckabfall bzw. einer dadurch verursachten Druckdifferenz bestimmt. Die Venturi-Messeinrichtung weist dazu eine Querschnittsverengung auf, durch die das Flüssiggas fließt. Dabei kommt es zu einer Erhöhung der Fließgeschwindigkeit und dadurch wiederum zu einem Druckabfall in der Venturi-Messeinrichtung, insbesondere einem an die Querschnittsverengung angeschlossenen Abnahmerohr. Dieser Druckabfall beziehungsweise eine Druckdifferenz zwischen dem Druck in dem Abnahmerohr und dem Messleitungsabschnitt wird gemessen. Hieraus kann in ebenfalls an sich bekannter Weise auf die Fließgeschwindigkeit des Flüssiggases geschlossen werden. Bei bekannten geometrischen Verhältnissen des Messleitungsabschnitts, insbesondere der Querschnitte, einschließlich der Querschnittsverengung der Venturi-Messeinrichtung, kann hieraus durch eine Integration über die Zeit auf den Volumenstrom des Flüssiggases geschlossen werden. Solche Messeinrichtungen sind an sich bekannt und sollen daher nicht näher erläutert werden.

Es sind erfindungsgemäß aber auch andere Messeinrichtungen zum Bestimmen des Volumenstroms denkbar, beispielsweise Massendurchflussmesser, wie Coriolis-Massendurchflussmesser. Solche Massendurchflussmesser können unter Umständen ebenfalls Gasbestandteile in dem Flüssiggas erkennen. Die Messeinrichtung kann dann also gleichzeitig als Gasblasendetektor genutzt werden. Entsprechend kann die Steuereinrichtung dann auf Grundlage der von der Messeinrichtung bereitgestellten Messdaten ein Warnsignal ausgeben und/oder die Flüssiggasabgabe stoppen, wenn durch die Messeinrichtung als Gasblasendetektor Gasanteile in dem Flüssiggas detektiert werden oder wenn der durch die Messeinrichtung bestimmte Flüssiggas-Volumenstrom einen Minimalvolumenstrom unterschreitet.

Nach einer Ausgestaltung kann die Steuereinrichtung dazu ausgebildet sein, das Anschlussventil in dem ersten Öffnungsschritt so zum teilweisen Öffnen anzusteuern, dass der Flüssiggas-Volumenstrom in dem Messleitungsabschnitt während der Zeitdauer des ersten Öffnungsschritts dem Minimalvolumenstrom entspricht. Der Flüssiggas-Volumenstrom wird also während des Andauerns des ersten Öffnungsschritts auf dem Wert des Minimalvolumenstroms gehalten. Dadurch wird einerseits ein unzulässiges Unterschreiten des Minimalvolumenstroms vermieden. Gleichzeitig wird ein Vergasen des Flüssiggases besonders sicher verhindert.

Der erste Öffnungsschritt kann nach einer weiteren Ausgestaltung für eine vorbestimmte Zeitdauer andauern oder bis ein vorbestimmtes Flüssiggas-Volumen durch den Messleitungsabschnitt geflossen ist oder bis durch einen Drucksensor ein vorgegebener Druck in der Flüssiggasleitung festgestellt wird. Die erforderliche Zeitdauer bzw. das erforderliche Volumen bzw. der erforderliche Druck, um bei der anschließenden vollständigen Öffnung des Anschlussventils keine Vergasung und damit gegebenenfalls ein Auslösen des Gasblasendetektors zu riskieren, kann vorab empirisch ermittelt werden. Lediglich beispielhaft könnte ein vorab bestimmtes Volumen bei 100 bis 200 Litern liegen. Da erfindungsgemäß auch während des ersten Öffnungsschritts der Volumenstrom ordnungsgemäß für die Abgabe gemessen wird, kann das in dieser Zeit durchgeflossene Flüssiggas-Volumen sicher bestimmt werden. Zum Messen des Drucks in der Flüssiggasleitung kann die erfindungsgemäße Vorrichtung einen Drucksensor aufweisen. Der Drucksensor kann ein speziell hierfür vorgesehener Drucksensor sein. Es ist aber auch denkbar, dass als Drucksensor ein Drucksensor der Venturi-Messeinrichtung zum Einsatz kommt, insbesondere wenn anstelle eines Differenzdrucksensors zwei getrennte Drucksensoren vorgesehen sind, von denen einer ohnehin den Druck in der Flüssiggasleitung stromab der Venturi-Messeinrichtung misst.

Das Anschlussventil kann ein pneumatisch angetriebenes Anschlussventil sein. Die Steuereinrichtung kann dann zum Ansteuern des Öffnungsventils Druckluft auf einen pneumatischen Antrieb des Anschlussventils geben. Der pneumatische Antrieb kann zum Beispiel ein pneumatisch betriebener Doppelkolbenantrieb sein. Das Anschlussventil kann ein pneumatisch angetriebener Kugelhahn sein.

Nach einer weiteren Ausgestaltung kann die Steuereinrichtung dazu ausgebildet sein, zu Beginn des ersten Öffnungsschritts Druckluft auf den pneumatischen Antrieb des Anschlussventils zu geben bis der Volumenstrom in dem Messleitungsabschnitt dem Minimalvolumenstrom entspricht und anschließend die Druckluftzufuhr zu unterbinden, bestenfalls bis zum Beginn des zweiten Öffnungsschritts. So bleibt das Anschlussventil nach einem Stopp der zugeführten Druckluft in der jeweiligen teilgeöffneten Stellung, vorausgesetzt es treten keine Druckluftverluste in dem Antrieb auf, beispielsweise aufgrund defekter Dichtungen. In diesem Fall muss gegebenenfalls nachgeregelt werden, wie nachfolgend näher erläutert werden wird. Im zweiten Öffnungsschritt wird das Anschlussventil dann beispielsweise durch Dauerdruckluft im vollständig geöffneten Zustand gehalten.

Die Steuereinrichtung kann weiterhin dazu ausgebildet sein, den Flüssiggas-Volumenstrom in dem Messleitungsabschnitt während des ersten Öffnungsschritts anhand von von der Messeinrichtung gelieferten Messdaten fortdauernd mit dem Minimalvolumenstrom zu vergleichen und bei einem Unterschreiten des Minimalvolumenstroms das Anschlussventil erneut zum teilweisen Öffnen anzusteuern bis der Minimalvolumenstrom wieder erreicht ist. Die Steuereinrichtung ist dann also eine Steuer- und Regeleinrichtung. Wenn der Minimalvolumenstrom unterschritten wird, weil zum Beispiel aufgrund defekter Dichtungen in dem Ventilantrieb Druckluftverluste auftreten, und das Anschlussventil daraufhin etwas schließt und somit einen geringeren Öffnungsquerschnitt bereitstellt, liefert die Steuereinrichtung beispielsweise Druckluft für den Antrieb des Anschlussventils nach, so dass dieses wieder einen größeren Öffnungsquerschnitt bereitstellt bis der Minimalvolumenstrom wiederhergestellt ist. Es folgt somit in besonders einfacher Weise eine Regelung des Anschlussventils derart, dass während des ersten Öffnungsschritts der Minimalvolumenstrom in dem Messleitungsabschnitt, insbesondere in der Messeinrichtung, nicht unterschritten wird.

Ein Ausführungsbeispiel der Erfindung wird nachfolgend anhand von Figuren näher erläutert. Es zeigen schematisch:

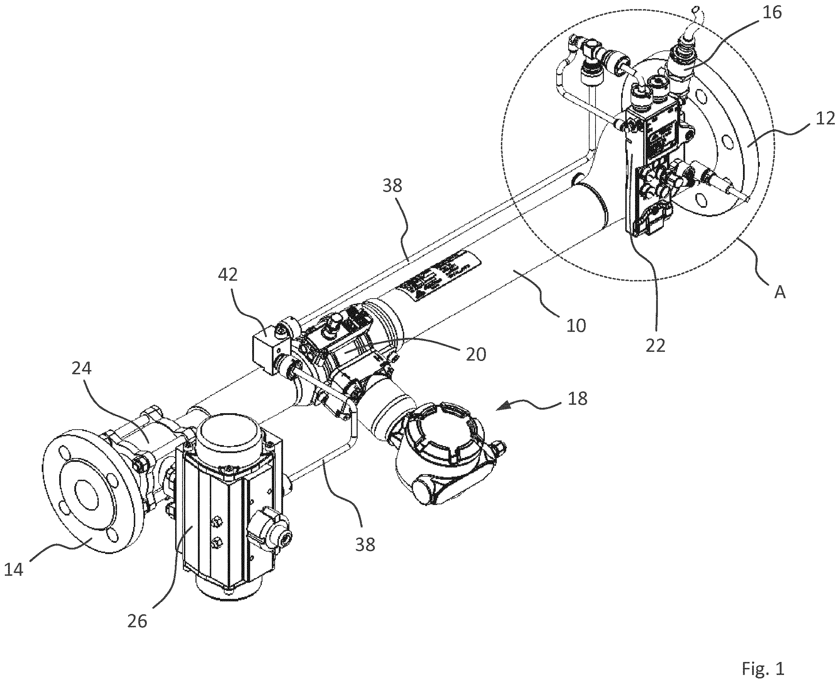

- Figur 1: eine erfindungsgemäße Vorrichtung in einer perspektivischen Ansicht, und
- Figur 2: eine vergrößerte Darstellung des Details A aus Figur 1.

Soweit nichts anderes angegeben ist, bezeichnen in den Figuren gleiche Bezugszeichen gleiche Gegenstände.

Die in den Figuren gezeigte Vorrichtung zum Bestimmen des Volumenstroms von über eine Flüssiggasleitung abgegebenem Flüssiggas umfasst einen rohrförmigen Messleitungsabschnitt 10 mit einem ersten Anschluss 12, insbesondere einem ersten Anschlussflansch 12, und einem zweiten Anschluss 14, insbesondere einem zweiten Anschlussflansch 14. Mit dem ersten Anschlussflansch 12 kann der Messleitungsabschnitt 10 mit einer beispielsweise von einem stationären Flüssiggastank kommenden Flüssiggasleitung (nicht dargestellt) verbunden werden. Mit dem zweiten Anschlussflansch 14 kann der Messleitungsabschnitt 10 beispielsweise mit einem Abgabeschlauch als Teil der Flüssiggasleitung verbunden werden, über den Flüssiggas aus dem Tank abgegeben werden kann, beispielsweise in einen Tank eines Tankwagens (ebenfalls nicht dargestellt).

An dem Messleitungsabschnitt 10 ist ein an sich bekannter Gasblasendetektor 16 zum Detektieren von Gasanteilen in dem durch den Messleitungsabschnitt 10 fließenden Flüssiggas angeordnet. Bei dem Bezugszeichen 18 ist in dem dargestellten Beispiel eine Venturi-Messeinrichtung gezeigt, die eine bei dem Bezugszeichen 20 gezeigte Querschnittsverengung gegenüber dem Messleitungsabschnitt 10 aufweist. Beim Durchfließen des Messleitungsabschnitts 10 kommt es im Bereich der Querschnittsverengung 20 zu einer Erhöhung der Fließgeschwindigkeit des Flüssiggases und dadurch zu einem Druckabfall in der Venturi-Messeinrichtung 18. Aus diesem Druckabfall kann in an sich bekannter Weise die Fließgeschwindigkeit des Flüssiggases und auf Grundlage des bekannten Querschnitts insbesondere im Bereich der Querschnittsverengung 20 der Volumenstrom des durch den Messleitungsabschnitt 10 hindurchfließenden und abgegebenen Flüssiggases bestimmt werden. Es sei jedoch darauf hingewiesen, dass anstelle einer Venturi-Messeinrichtung auch andere Messeinrichtungen zum Bestimmen des Volumenstroms möglich sind.

Bei dem Bezugszeichen 22 ist außerdem eine Steuereinrichtung der erfindungsgemäßen Vorrichtung gezeigt. An der Steuereinrichtung 22 liegen über nicht näher dargestellte Leitungen einerseits Messwerte bzw. Signale der Venturi-Messeinrichtung 18 und andererseits Messwerte bzw. Signale des Gasblasendetektors 16 an. Bei dem Bezugszeichen 24 ist ein Anschlussventil zum Anschließen des Messleitungsabschnitts 10 an die Flüssiggasleitung, insbesondere den Abgabeschlauch, dargestellt. Bei dem Anschlussventil kann es sich zum Beispiel um einen pneumatisch betriebenen Kugelhahn handeln. Ein pneumatischer Antrieb für das Anschlussventil 24 ist bei dem Bezugszeichen 26 gezeigt. Bei dem pneumatischen Abtrieb 26 kann es sich zum Beispiel um einen Doppelkolbenantrieb handeln.

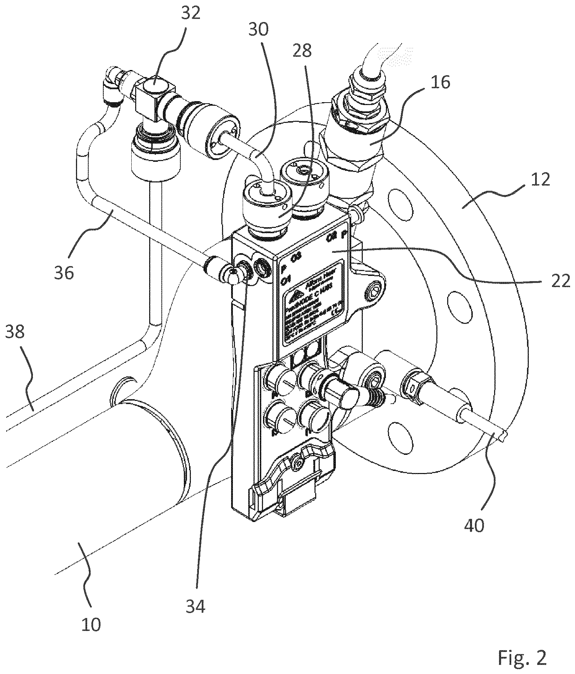

Wie insbesondere in der vergrößerten Darstellung der Figur 2 zu erkennen, weist die Steuereinrichtung 22 ein erstes Magnetventil 28 auf, von dem eine erste Pneumatikleitung 30 zu einem entsperrbaren Rückschlagventil 32 führt. Die Steuereinrichtung 22 umfasst darüber hinaus ein zweites Magnetventil 34, von dem ausgehend eine zweite Pneumatikleitung 36 ebenfalls zu dem entsperrbaren Rückschlagventil 32 führt. Von dem entsperrbaren Rückschlagventil 32 führt eine dritte Pneumatikleitung 38 zu dem pneumatischen Antrieb 26 des Anschlussventils 24. Über die Pneumatikleitungen 30, 36 und 38 kann die Steuereinrichtung 22 Druckluft auf dem pneumatischen Antrieb 26 des Anschlussventils 24 zum Öffnen des Anschlussventils 24 mit variablem Öffnungsquerschitt geben, wie nachfolgend näher erläutert werden wird. Die Druckluftversorgung für die Steuereinrichtung 22 ist insbesondere in Figur 2 bei dem Bezugszeichen 40 teilweise dargestellt.

Zur Abgabe von Flüssiggas wird der Messleitungsabschnitt 10 über die Anschlussflansche 12 und 14 in die Flüssiggasleitung eingesetzt. Während der Abgabe von Flüssiggas misst die Venturi-Messeinrichtung 18 den abgegebenen Volumenstrom. Werden durch den Gasblasendetektor unzulässige Gasanteile in dem Flüssiggas detektiert oder unterschreitet der durch die Venturi-Messeinrichtung 18 bestimmte Flüssiggas-Volumenstrom einen definierten Minimalvolumenstrom, gibt die Steuereinrichtung ein Warnsignal aus und/oder stoppt die Flüssiggasabgabe, insbesondere durch Schließen des Anschlussventils 24. Zum schnellen Schließen des Anschlussventils 24 ist in der dritten Pneumatikleitung 38 ein Schnellentlüfter 42 angeordnet, über den schnell Druckluft aus dem pneumatischen Antrieb 26 abgelassen und so das Anschlussventil 24 schnell geschlossen werden kann.

Zu Beginn eines Abgabevorgangs für Flüssiggas steuert die Steuereinrichtung 22 den pneumatischen Antrieb 26 in einem ersten Öffnungsschritt zum teilweisen Öffnen des Anschlussventils 24 an. Dazu gibt die Steuereinrichtung 22 beispielsweise über die erste Pneumatikleitung 30 und über das entsperrbare Rückschlagventil 32 Druckluft über die dritte Pneumatikleitung 38 auf den pneumatischen Antrieb 26 bis der von der Venturi-Messeinrichtung 18 gemessene und an die Steuereinrichtung 22 gesendete Flüssiggas-Volumenstrom dem Minimalvolumenstrom entspricht. Sobald dies der Fall ist, wird die Druckluftzufuhr über die Pneumatikleitungen 30, 38 zu dem pneumatischen Antrieb 26 gestoppt und dieser Zustand beispielsweise für eine vorbestimmte Zeitdauer oder bis ein vorbestimmtes Flüssiggas-Volumen durch die Venturi-Messeinrichtung 18 geflossen ist, gehalten. Sollte es währenddessen zu einem Abfall des Flüssiggas-Volumenstroms in der Venturi-Messeinrichtung 18 unter den Minimalvolumenstrom kommen, führt die Steuereinrichtung 22 dem pneumatischen Antrieb 26 erneut Druckluft zu, bis in der Venturi-Messeinrichtung 18 wieder der Minimalvolumenstrom erreicht ist.

Nach Ablauf der vorbestimmten Zeitdauer beziehungsweise nach Durchfluss des vorbestimmten Flüssiggas-Volumens wird der erste Öffnungsschritt beendet und im Zuge eines zweiten Öffnungsschritts von der Steuereinrichtung 22 Druckluft über die erste Pneumatikleitung 30, die zweite Pneumatikleitung 36 und die dritte Pneumatikleitung 38 auf den pneumatischen Antrieb 26 gegeben, so dass dieser das Anschlussventil 24 in die vollständig geöffnete Stellung stellt. Dieser zweite Öffnungsschritt bleibt nun für die Restdauer der Flüssiggasabgabe erhalten.

Durch die Erfindung wird in konstruktiv einfacher und robuster Weise auch bei einem etwaigen Druckabfall in der Flüssiggasleitung zu Beginn eines Abgabevorgangs ein Auslösen des Gasblasendetektors und ein Unterschreiten des Minimalvolumenstroms in der Venturi-Messeinrichtung sicher verhindert. Gleichzeitig wird das abgegebene Flüssiggas-Volumen zuverlässig und lückenlos während des ersten und zweiten Öffnungsschritts bestimmt. Dabei zeichnet sich die erfindungsgemäße Vorrichtung durch ein geringes Gewicht und eine geringe Baugröße aus.

## Patentansprüche

1. Vorrichtung zum Bestimmen des Volumenstroms von über eine Flüssiggasleitung abgegebenem Flüssiggas, umfassend einen über ein Anschlussventil (24) mit variablem Öffnungsquerschnitt an die Flüssiggasleitung anschließbaren Messleitungsabschnitt (10), und eine an dem Messleitungsabschnitt (10) angeordnete Messeinrichtung (18), die den durch den Messleitungsabschnitt (10) fließenden Flüssiggas-Volumenstrom bestimmt,
**gekennzeichnet durch** eine Steuereinrichtung (22), an der Messdaten der Messeinrichtung (18) anliegen, wobei die Steuereinrichtung (22) dazu ausgebildet ist, ein Warnsignal auszugeben und/oder die Flüssiggasabgabe zu stoppen, wenn der durch die Messeinrichtung (18) bestimmte Flüssiggas-Volumenstrom einen Minimalvolumenstrom unterschreitet, wobei die Steuereinrichtung (22) weiter dazu ausgebildet ist, zu Beginn eines Flüssiggasabgabevorgangs in einem ersten Öffnungsschritt das Anschlussventil (24) so zum teilweisen Öffnen anzusteuern, dass der Minimalvolumenstrom in dem Messleitungsabschnitt (10) während der Zeitdauer des ersten Öffnungsschritts nicht unterschritten wird, und in einem nachfolgenden zweiten Öffnungsschritt das Anschlussventil (24) zum vollständigen Öffnen anzusteuern.

2. Vorrichtung nach Anspruch 1, **dadurch gekennzeichnet, dass** an dem Messleitungsabschnitt (10) weiterhin ein Gasblasendetektor (16) angeordnet ist, wobei an der Steuereinrichtung auch Messdaten des Gasblasendetektors (16) anliegen, und wobei die Steuereinrichtung (22) dazu ausgebildet ist, ein Warnsignal auszugeben und/oder die Flüssiggasabgabe zu stoppen, wenn durch den Gasblasendetektor (16) Gasanteile in dem Flüssiggas detektiert werden oder wenn der durch die Messeinrichtung (18) bestimmte Flüssiggas-Volumenstrom einen Minimalvolumenstrom unterschreitet.

3. Vorrichtung nach einem der Ansprüche 1 oder 2, **dadurch gekennzeichnet, dass** die Messeinrichtung eine Venturi-Messeinrichtung ist.

4. Vorrichtung nach einem der Ansprüche 1 oder 2, **dadurch gekennzeichnet, dass** die Messeinrichtung ein Massendurchflussmesser ist.

5. Vorrichtung nach einem der vorhergehenden Ansprüche, **dadurch gekennzeichnet, dass** die Steuereinrichtung (22) dazu ausgebildet ist, das Anschlussventil (24) in dem ersten Öffnungsschritt so zum teilweisen Öffnen anzusteuern, dass der Flüssiggas-Volumenstrom dem Messleitungsabschnitt (10) während der Zeitdauer des ersten Öffnungsschritts dem Minimalvolumenstrom entspricht.

6. Vorrichtung nach einem der vorhergehenden Ansprüche, **dadurch gekennzeichnet, dass** der erste Öffnungsschritt für eine vorbestimmte Zeitdauer andauert oder bis ein vorbestimmtes Flüssiggas-Volumen durch den Messleitungsabschnitt (10) geflossen ist oder bis durch einen Drucksensor ein vorgegebener Druck in der Flüssiggasleitung festgestellt wird.

7. Vorrichtung nach einem der vorhergehenden Ansprüche, **dadurch gekennzeichnet, dass** das Anschlussventil (24) ein pneumatisch angetriebenes Anschlussventil (24) ist, und dass die Steuereinrichtung (22) zum Ansteuern des Öffnungsventils Druckluft auf einen pneumatischen Antrieb (26) des Anschlussventils (24) gibt.

8. Vorrichtung nach Anspruch 7, **dadurch gekennzeichnet, dass** das Anschlussventil (24) ein pneumatisch angetriebener Kugelhahn (24) ist.

9. Vorrichtung nach einem der Ansprüche 7 oder 8, **dadurch gekennzeichnet, dass** die Steuereinrichtung (22) dazu ausgebildet ist, zu Beginn des ersten Öffnungsschritts Druckluft auf den pneumatischen Antrieb (26) des Anschlussventils (24) zu geben bis der Volumenstrom in dem Messleitungsabschnitt (10) dem Minimalvolumenstrom entspricht und anschließend die Druckluftzufuhr zu unterbinden.

10. Vorrichtung nach einem der vorhergehenden Ansprüche, **dadurch gekennzeichnet, dass** die Steuereinrichtung weiterhin dazu ausgebildet ist, den Flüssiggas-Volumenstrom in dem Messleitungsabschnitt (10) während des ersten Öffnungsschritts anhand von von der Messeinrichtung (18) gelieferten Messdaten fortdauernd mit dem Minimalvolumenstrom zu vergleichen und bei einem Unterschreiten des Minimalvolumenstroms das Anschlussventil (24) erneut zum teilweisen Öffnen anzusteuern bis der Minimalvolumenstrom wieder erreicht ist.

## Claims

1. A device for determining the volume flow of liquid gas discharged by a liquid gas line, comprising a measuring line portion (10) that can be connected to the liquid gas line via a connection valve (24) having a variable opening cross-section, and comprising a measuring apparatus (18) that is arranged on the measuring line portion (10) and that determines the volume flow of liquid gas flowing through the measuring line portion (10),
**characterized by** a control apparatus (22) to which measurement data of the measuring apparatus (18) are applied, wherein the control apparatus (22) is designed to issue a warning signal and/or to stop the discharge of liquid gas if the volume flow of liquid gas determined by means of the measuring apparatus (18) falls below a minimum volume flow, wherein the control apparatus (22) is further designed, in a first opening step, to actuate the connection valve (24) so as to partially open same at the start of a liquid gas discharge process in such a way that the volume flow in the measuring line portion (10) does not fall below the minimum volume flow for the duration of the first opening step and, in a subsequent second opening step, to actuate the connection valve (24) so as to fully open same.

2. The device according to claim 1, **characterized in that** a gas bubble detector (16) is also arranged on the measuring line portion (10), wherein measurement data of the gas bubble detector (16) are also applied to the control apparatus, and wherein the control apparatus (22) is designed to issue a warning signal and/or to stop the discharge of liquid gas if gas components are detected in the liquid gas by means of the gas bubble detector (16) or if the volume flow of liquid gas determined by means of the measuring apparatus (18) falls below a minimum volume flow.

3. The device according to any one of claims 1 or 2, **characterized in that** the measuring apparatus is a Venturi measuring apparatus.

4. The device according to any one of claims 1 or 2, **characterized in that** the measuring apparatus is a mass flow meter.

5. The device according to any one of the preceding claims, **characterized in that** the control apparatus (22) is designed, in the first opening step, to actuate the connection valve (24) so as to partially open same such that the volume flow of liquid gas in the measuring line portion (10) corresponds to the minimum volume flow for the duration of the first opening step.

6. The device according to any one of the preceding claims, **characterized in that** the first opening step lasts for a predefined period of time or until a predetermined volume of liquid gas has flowed through the measuring line portion (10) or until a pressure sensor ascertains a predefined pressure in the liquid gas line.

7. The device according to any one of the preceding claims, **characterized in that** the connection valve (24) is a pneumatically driven connection valve (24), and **in that** the control apparatus (22) supplies pressurized air to a pneumatic drive (26) of the connection valve (24) in order to actuate the opening valve.

8. The device according to claim 7, **characterized in that** the connection valve (24) is a pneumatically driven ball valve (24).

9. The device according to any one of claims 7 or 8, **characterized in that** the control apparatus (22) is designed, at the start of the first opening step, to supply pressurized air to the pneumatic drive (26) of the connection valve (24) until the volume flow in the measuring line portion (10) corresponds to the minimum volume flow and, subsequently, to halt the supply of pressurized air.

10. The device according to any one of the preceding claims, **characterized in that** the control apparatus is further designed, during the first opening step, to constantly compare the volume flow of liquid gas in the measuring line portion (10) with the minimum volume flow based on measurement data provided by the measuring apparatus (18) and, in the event of the volume flow falling below the minimum volume flow, to actuate the connection valve (24) again so as to partially open same until the minimum volume flow is achieved again.

## Revendications

1. Dispositif de détermination du flux volumétrique d'un gaz liquide distribué par une conduite de gaz liquide, comportant une section de conduite de mesure (10) apte à être raccordée à la conduite de gaz liquide par le biais d'une soupape de raccordement (24) à section transversale d'ouverture variable, ainsi qu'un dispositif de mesure (18) disposé sur la section de conduite de mesure (10), lequel détermine le flux volumétrique de gaz liquide s'écoulant à travers la section de conduite de mesure (10),
**caractérisé par** un dispositif de commande (22) auquel sont appliquées des données de mesure du dispositif de mesure (18), dans lequel le dispositif de commande (22) est conçu pour émettre un signal d'alerte et/ou pour arrêter la distribution de gaz liquide lorsque le flux volumétrique de gaz liquide déterminé par le dispositif de mesure (18) tombe en dessous d'un flux volumétrique minimal, dans lequel le dispositif de commande (22) est en outre conçu pour commander la soupape de raccordement (24) pour une ouverture partielle dans une première étape d'ouverture au début d'une opération de distribution de gaz liquide de manière à ne pas tomber en dessous du flux volumétrique minimal dans la section de conduite de mesure (10) pendant la durée de la première étape d'ouverture, et pour commander la soupape de raccordement (24) pour une ouverture complète dans une deuxième étape d'ouverture consécutive.

2. Dispositif selon la revendication 1, **caractérisé en ce qu'**un détecteur de bulles de gaz (16) est en outre disposé sur la section de conduite de mesure (10), dans lequel des données de mesure du détecteur de bulles de gaz (16) sont également appliquées au dispositif de commande, et dans lequel le dispositif de commande (22) est conçu pour émettre un signal d'alerte et/ou pour arrêter la distribution de gaz liquide lorsque des fractions de gaz sont détectées dans le gaz liquide par le détecteur de bulles de gaz (16) ou lorsque le flux volumétrique de gaz liquide déterminé par le dispositif de mesure (18) tombe en dessous d'un flux volumétrique minimal.

3. Dispositif selon l'une des revendications 1 ou 2, **caractérisé en ce que** le dispositif de mesure est un dispositif de mesure Venturi.

4. Dispositif selon l'une des revendications 1 ou 2, **caractérisé en ce que** le dispositif de mesure est un débitmètre massique.

5. Dispositif selon l'une des revendications précédentes, **caractérisé en ce que** le dispositif de commande (22) est conçu pour commander la soupape de raccordement (24) pour une ouverture partielle dans la première étape d'ouverture de telle façon que le flux volumétrique de gaz liquide dans la section de conduite de mesure (10) correspond au flux volumétrique minimal pendant la durée de la première étape d'ouverture.

6. Dispositif selon l'une des revendications précédentes, **caractérisé en ce que** la première étape d'ouverture se prolonge sur une durée prédéterminée ou jusqu'à ce qu'un volume de gaz liquide prédéterminé se soit écoulé à travers la section de conduite de mesure (10) ou jusqu'à la détection d'une pression prédéfinie dans la conduite de gaz liquide par un capteur de pression.

7. Dispositif selon l'une des revendications précédentes, **caractérisé en ce que** la soupape de raccordement (24) est une soupape de raccordement (24) entraînée pneumatiquement, et **en ce que** le dispositif de commande (22) fournit de l'air comprimé à un entraînement pneumatique (26) de la soupape de raccordement (24) pour commander la soupape d'ouverture.

8. Dispositif selon la revendication 7, **caractérisé en ce que** la soupape de raccordement (24) est un robinet à boisseau sphérique (24) entraîné pneumatiquement.

9. Dispositif selon l'une des revendications 7 ou 8, **caractérisé en ce que** le dispositif de commande (22) est conçu pour fournir de l'air comprimé à l'entraînement pneumatique (26) de la soupape de raccordement (24) au début de la première étape d'ouverture, jusqu'à ce que le flux volumétrique dans la section de conduite de mesure (10) corresponde au flux volumétrique minimal, et pour empêcher ensuite l'alimentation en air comprimé.

10. Dispositif selon l'une des revendications précédentes, **caractérisé en ce que** le dispositif de commande est en outre conçu pour comparer en continu le flux volumétrique de gaz liquide dans la section de conduite de mesure (10) avec le flux volumétrique minimal pendant la première étape d'ouverture à l'aide de données de mesure fournies par le dispositif de mesure (18) et pour commander de nouveau la soupape de raccordement (24) pour une ouverture partielle lors d'un soupassement du flux volumétrique minimal, jusqu'à ce que le flux volumétrique minimal soit de nouveau atteint.
